# EUROPEAN PATENT APPLICATION

(11) **EP 3 446 792 A1**
(43) Date of publication of application: **27.02.2019**
(21) Application number: 17187158.5
(22) Date of filing: 22.08.2017
(51) Int. Cl.: B05D 1/28, B05C 5/00, B05C 5/02

(54) **METHOD AND APPARATUS FOR APPLICATION OF SUPERABSORBENT IMMOBILISER**

(71) Applicant: The Procter & Gamble Company, Cincinnati, OH 45202 (US)
(72) Inventor: RIES, Agnieska Zuzanna, 53881 Euskirchen (DE); VAN DER KLUGT, Mr. Walter Pieter Hendrik Laurentius, 53881 Euskirchen (DE)
(74) Representative: Mather, Peter Geoffrey

(57) **Abstract**

The present invention relates to a method of distributing an adhesive from a nozzle (10), the method comprising the steps of:
melting the adhesive at a temperature of at least 100°C;
transporting the molten adhesive to the nozzle (10), wherein the nozzle (10) comprises upper nozzle assembly, lower nozzle assembly and at least one duct (40) within at least the
upper nozzle assembly through which the molten adhesive is transported;
wherein the lower nozzle assembly comprises at least one cooling gas duct (50), and passing cooling gas through the cooling gas duct (50) wherein in the temperature of the cooling gas is from -20°C to +50°C.

Additionally the present invention relates to method of distributing an adhesive from a nozzle (10), wherein the nozzle (10) comprises an adhesive distribution shim (60), the adhesive distribution shim (60) comprises two sides, and wherein adhesive distribution channels are arranged in both sides of the adhesive distribution shim (60).

The present invention further relates to nozzle assembly suitable for use in the methods described above.

## Description

### Field of the Invention

The present invention relates to methods of distributing an adhesive from a nozzle, and to **suitable nozzle assembly.**

### Background of the Invention

Adhesives are generally applied to manufactured articles, such as personal hygiene articles, by providing a metered quantity of the adhesive through an application nozzle. Typically the **adhesive, preferably in molten form, is pumped under pressure to the application nozzle.**

The application nozzle directs the adhesive in the required quantity and in the required distribution pattern onto the application area which generally is a region of the manufactured article.

Adhesives, especially molten adhesives, require control of temperature to maintain a certain viscosity and pressure in order to maintain control over the distribution pattern. Existing application nozzles are sometimes provided with ducts which provide a heated gas, such as hot air, to the applicator. The temperature of the gas is maintained at about the same temperature as the nozzle, typically 100°C and higher, and is usually delivered directly through the orifices integrated as part of the nozzle. The air flow itself is utilized to create a draw at the nozzle exit supporting fiber creation.

Recent developments have led towards new group of materials which are superabsorbent immobilizers comprising at least one polymer having a peak molecular weight of at least about 10 kg/mol, as determined using the gel permeation chromatography method. US 2017/0209616, published on July 27th 2017, describes personal hygiene articles comprising absorbent cores with high molecular weight superabsorbent immobilizer.

It has been recognised that recently developed high molecular weight superabsorbent immobilizer compositions require longer to solidify than conventional compositions. Hence the present invention is concerned with improving the processibility of high molecular weight adhesives, such as superabsorbent immobilizer compositions.

### Summary of the Invention

The present invention relates to a method of distributing an adhesive from a nozzle, the method comprising the steps of:
melting the adhesive at a temperature of at least 100°C;
transporting the molten adhesive to the nozzle, wherein the nozzle comprises upper nozzle assembly, lower nozzle assembly and at least one duct within at least the upper nozzle assembly through which the molten adhesive is transported;
wherein the lower nozzle assembly comprises at least one cooling gas duct, and passing cooling gas through the cooling gas duct wherein in the temperature of the cooling gas is from -20°C to +50°C, preferably 0°C to +30°C.

Additionally the present invention relates to method of distributing an adhesive from a nozzle, wherein the nozzle comprises an adhesive distribution shim, the adhesive distribution shim comprises two sides, and wherein adhesive distribution channels are arranged in both sides of the adhesive distribution shim.

### Brief Description of the Drawings

Figure 1 shows a schematic cross-section through a nozzle of the prior art.
Figure 2 shows a schematic cross-section through a nozzle of the present invention.
Figure 3 shows a side view of the lower part of the adhesive distribution shim used in the nozzle shown in Figure 1.
Figures 4A and 4B show cross-sections close to the nozzle tip taken though alternative adhesive distribution shim designs of the present invention.

### Detailed Description of the Invention

The present invention provides cooling gas at a temperature of from minus 20°C to plus 50°C (-20°C to +50°C), preferably 0°C to +30°C. Any suitable cooling gas may be used, including preferred cooling gases air, nitrogen, or carbon dioxide, or combinations thereof Most preferred is air.

Preferably the cooling gas is directed through ducts adjacent to the nozzle and the cooling gas is expelled from the air ducts adjacent to the exit from the nozzle.

In a preferred embodiment of the present invention the applicator comprises a nozzle or a plurality of nozzles comprising upper and lower nozzle assemblies, and further comprises a thermally insulating layer between the upper and lower nozzle assemblies.

According to one such embodiment the upper nozzle assembly is heated to maintain the target temprature of the molten adhesive, and the lower nozzle assembly is maintained at ambient temperature or cooled by the cooling gas ducts located in or adjacent to the lower nozzle assembly. The thermally insulating material is placed between the upper nozzle assembly and the lower nozzle assembly to minimise heat exchange by conduction between the upper and lower nozzle assemblies. An example of suitable thermally insulating materials is polyetheretherketone, PEEK. Alternatively, or additionally, a layer of air may act as a suitable thermally insulating material.

According to another such embodiment the upper nozzle assembly and the cooling gas ducts are spaced apart, with layer of cooling gas in between the upper nozzle assembly and the cooling gas ducts to minimise or reduce heat transfer by conduction from the upper nozzle assembly to the lower nozzle assembly, and cooling gas is directed into the air ducts directly.

Optionally an additional step may also be provided, with secondary cooling gas being added in between the nozzle exit after the step where the fibers are deposited to further facilitate the control of the temperature. The addition of secondary cooling gas can be directly incorporated to the nozzle assembly, or alternatively can be stand-alone execution, with cooling gas being directed at the fibers in transition between the nozzle exit and the substrate.

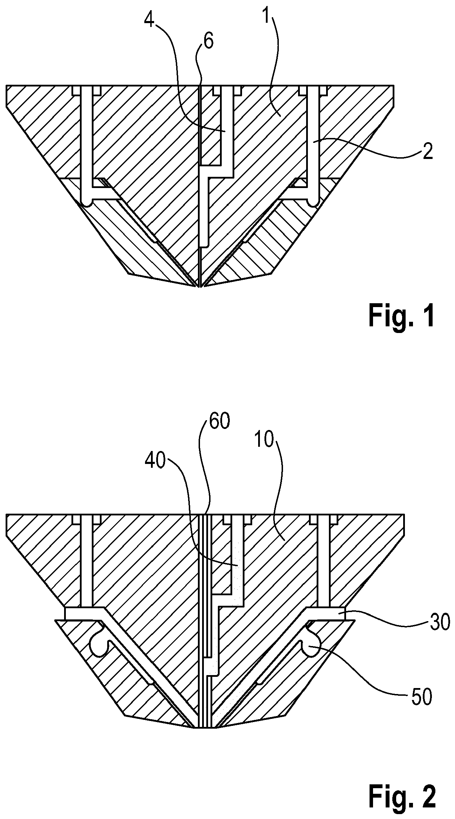

Figure 1 shows a conventional applicator of the prior art comprising an nozzle 1 and hot gas ducts 2. Hot gas, preferably hot air, is supplied through the hot nozzle to the hot gas ducts.

Figure 2 shows a nozzle 10, comprising upper and lower nozzle assemblies, and cooling gas duct 50.The nozzle further comprises a thermally insulating material 30 between the hot nozzle 10 and the cooling gas duct 50. Molten adhesive is supplied to the nozzle 10, through a supply duct 40 passing through the upper nozzle assembly and the thermally insulating material 30. Cooling gas, for example cooling air at minus 20°C to 50°C (-20°C to +50°C) is supplied through gas duct 50.

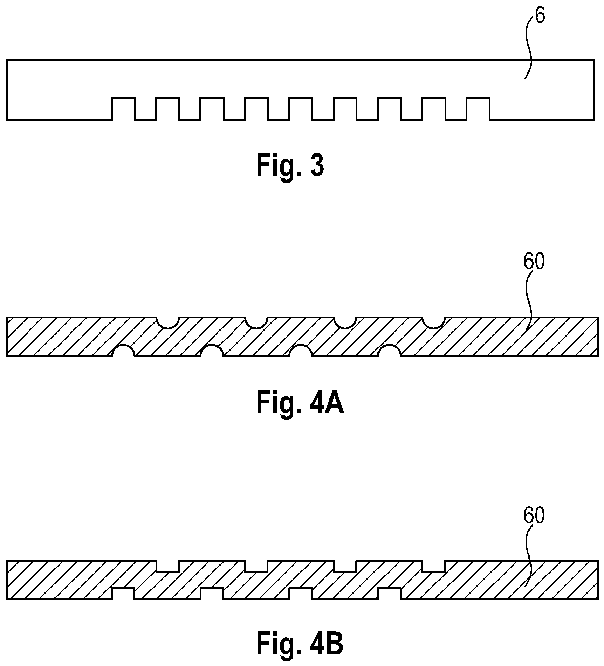

Figure 3A shows a side view of an adhesive distribution shim 6 which is used to distribute the adhesive within the nozzle. The lower part of the adhesive distribution shim, in the region of the nozzle tip, is shaped like a comb such that the spaces between the teeth provide channels for the adhesive to flow the the exit of the nozzle.

Figures 4A and 4B show cross-sectional views of alternative, modified shims 60 comprising channels positioned on both sids of the shim. The adhesive flows through these channels to the exit of the nozzle. These modified shim designs allow lower processing temperatures to be achieved by enabling a direct creation of thin densely concentrated fibers of adhesive such as superabsorbent immobilizers.

### Superabsorbent Immobilizer (SI)

The superabsorbent immobilizer, SI, is a composition that is applied with the intent to immobilize the superabsorbent material in both the dry and wet state in a personal hygiene product, for example. The SI may be a fiberized structure with, for example, microfibers or nanofibers, or may be a film, or discrete blobs of material, or some other form. The SI may be, for example, a discrete form such as a layer of material, or a fibrous material that interweaves or intertwines with surrounding materials, such as the particles of superabsorbent material. A single absorbent core may have more than one SI, if the SI is in a countable form such as discrete layers. A single absorbent core may have more than one area comprising SI, and some of the SI from each area may or may not have contact or intertwine. A single absorbent core may have more than one form of SI. The SI of the present invention may comprise little to nothing other than high molecular weight (MW) polymer material. In some embodiments, the superabsorbent immobilizer may consist essentially of one or more polymers having a peak molecular weight of at least about 10 kg/mol. In some embodiments, the superabsorbent immobilizer may comprise at least about 55%, 60%, 65%, 70%, 75%, 80%, 85%, 90%, 95%, 97%, 98%, 99%, 100% by weight of one or more polymers each having a peak molecular weight of at least about 10 kg/mol. In some embodiments, the SI may comprise at least one polymer having a peak molecular weight of at least about 10 kg/mol, as determined using the gel permeation chromatography method described herein, wherein the combined total of each of these high molecular weight polymers comprises at least 50% by weight of the superabsorbent immobilizer.

The superabsorbent immobilizer may comprise at least one component whose peak molecular weight is less than about 9.0 kg/mol. In some embodiments, the superabsorbent immobilizer may comprise at most about 50% by weight of these components with peak molecular weights less than about 9.0 kg/mol. In some embodiments, the superabsorbent immobilizer may comprise at most about or less than about 45%, 40%, 35%, 30%, 25%, 20%, 15%, 10%, 5%, 3%, 2%, or 1% by weight of components having a peak molecular weight less than about 9.0 kg/mol. These components with lower peak molecular weights may be additives, such as tackifiers, plasticizers, oils, waxes, surfactants, crystallinity enhancers, and/or other materials typically mixed with high molecular weight polymers in order to be used in hotmelt compositions for absorbent articles, as are known in the art. In some embodiments, the superabsorbent immobilizer may be substantially tackifier-free, in some embodiments, it may comprise at most about 40%, 35%, 30%, 25%, 20%, 15%, 10%, 5%, 3%, 2%, or 1% tackifier, and in some embodiments may comprise 0% tackifier. In some embodiments, the superabsorbent immobilizer may be substantially free of any tackifiers, waxes, oils, and plasticizers.
The superabsorbent immobilizer may have a storage modulus (G') at 25° C. of less than about 1.2×10⁹ Pa. The high molecular weight polymers, i.e., those with a peak molecular weight of at least about 10 kg/mol, may be the sole material or a high percentage of the superabsorbent immobilizer, and may also have a storage modulus (G') at 25° C. of less than about 1.2×10⁹ Pa.

The superabsorbent immobilizer may have a heat of fusion value of less than about 80 J/g. In some embodiments, the heat of fusion of the superabsorbent immobilizer may be less than about 50 J/g, less than about 40 J/g, less than about 35 J/g, from about 2 to about 80 J/g, from about 5 to about 50 J/g, or from about 7 to about 35 J/g. The high molecular weight polymers may also have heat of fusion values of less than about 80 J/g, less than about 50 J/g, less than about 40 J/g, from about 2 to about 80 J/g, from about 5 to about 50 J/g, or from about 7 to about 35 J/g. Heat of fusion, as used herein is determined using ASTM D3418-08.

The superabsorbent immobilizer may comprise high molecular weight polymers (i.e., those with peak molecular weights of at least about 10 kg/mol) selected from the group consisting of polymers and copolymers of propylene, ethylene, butene, and combinations thereof; styrenic block copolymers; polyolefins; olefin block copolymers, and combinations thereof. Additional suitable polymers include polyolefins (e.g., homopolymers, copolymers, or terpolymers of C2 to C8 alphaolefins, polyethylenes, polypropylenes, polypropylene-co-ethylene, polyethylene-co-propylene, polypropylene-co-butene, polyethylene-co-octene, branched, linear, HDPE, LDPE, LLDPE, metallocene catalyzed, Ziegler-Natta catalyzed, living polymerizations, etc.) and blends, mixtures, copolymers, thereof; polyethylene/unsaturated carboxylic acid, salt and ester interpolymers (e.g., polyethylene vinyl acetate (EVA), polyethylene ethyl-acrylate (EEA), polyethylene/methyl acrylate, polyethylene isobutyl acrylate, polyethylene methyl methacrylate) and blends, mixtures thereof; polyesters (e.g., aliphatic polyesters, poly(ethylene terephthalate), poly(ethylene isophthalate), poly(hydroxyalkanoates), polylactic acid, polyglycolic acid) and blends, mixtures and copolymers thereof; polystyrenes (e.g., poly(alpha-methystyrene), poly(2-methyl styrene), poly(4-methyl styrene), poly(4-methoxystyrene), poly(4-phenyl styrene), poly(4-pheny-1-propene), and blends, mixtures and copolymers thereof; polyacrylates (e.g., poly(acrylic acid), poly(methy acrylate), poly(ethy acrylate), poly(propyl acrylate), poly(isopropyl acrylate), poly(butyl acrylate), poly(isobutyl acrylate), and blends, mixtures and copolymers thereof; styrenic block copolymers (e.g., ABA triblock structures, A-B diblock structures and (A-B)n radial structures wherein the A blocks are non-elastomeric polymer blocks, typically comprising polystyrene, and the B blocks are unsaturated conjugated diene or partly hydrogenated versions of such. The B block is typically polyisoprene, polybutadiene, poly-ethylene/butane (hydrogenated polybutadiene), poly-ethylene/propylene (hydrogenated polyisoprene) and blends, mixtures thereof. Preferred superabsorbent immobilizers include homopolymers, copolymers, or terpolymers of C2 to C8 alphaolefins, and blends or mixtures thereof. Even more preferred superabsorbent immobilizers include metallocene catalyzed polypropylene copolymerized with ethylene. Examples of polymers that may be all or part of a superabsorbent immobilizer include Vistamaxx 8380 and Vistamaxx 8780, commercially available from Exxon. In some cases, the entire superabsorbent immobilizer may consist essentially of one material, such as the Vistamaxx 8380 or Vistamaxx 8780.
The superabsorbent immobilizers may be soluble in organic solvents at room temperature or elevated temperature. The peak molecular weight of each polymer in the superabsorbent immobilizer may be less than about 3,000 kg/mol. Each of the high molecular weight polymers may be used alone as a superabsorbent immobilizer, or may be combined with other polymers. Some superabsorbent immobilizers may be substantially 100% high molecular weight polymer, either a single high molecular weight polymer or a combination of two or more high molecular weight polymers. Some superabsorbent immobilizers may be one high molecular weight polymer or a combination of high molecular weight polymers combined with additives, such as some amount of tackifier, plasticizer, oil, waxes, and/or other materials as are known in the art. Any additive may be considered a low molecular weight material, meaning a molecular weight less than about 9.0 kg/mol.
In some embodiments, functionalized polymers, such as functionalized polyolefins, may be used as all or part of the superabsorbent immobilizer. Such functional polymers may be hydrophilic, and thus be advantageous. A fibrous nonwoven web or web-forming material may be chemically reacted with a polar material. The polar material can include an anhydride or anhydride derivative (e.g., a carboxylic acid derivative) and can be a monomer, polymer, or compound. The reaction product is a hydrophobic polymer material having a polar functionality (herein called a polar-modified polymer). Preferably, the nonwoven web or web-forming material is reacted with maleic anhydride or one of its derivatives, such as maleic acid or fumaric acid. Other suitable polar materials include without limitation various anhydrides and their derivatives, particularly those having an unsaturated carbon-carbon double bond: HOOCCH=CHCOOH. The polar material is reacted with the hydrophobic polymer, either using heat or a catalyst (e.g., a peroxide catalyst), or a combination of heat and catalyst. When heat is employed, the reaction may take place at a temperature near or above the melting point of the hydrophobic polymer. For instance, the hydrophobic polymer and polar material may be blended together in a mixer, with the hydrophobic polymer in the molten state, to facilitate substantially homogeneous mixing and reaction between the polar material and hydrophobic polymer. When the hydrophobic polymer includes polypropylene, for instance, the reaction may occur in a mixer at a temperature of about 160-225° C., preferably 175-200° C., with or without a peroxide catalyst, whereby the polar material is graft polymerized onto the hydrophobic polymer. Alternatively, the chemical reaction may occur at a much lower temperature in a solvent, with the grafting reaction being aided by a peroxide catalyst. Techniques for graft polymerizing a polar material, such as maleic anhydride or a dicarboxylic acid derivative, onto a hydrophobic polymer (e.g., a polyolefin) are well known in the art. As an alternative to polymerizing the polar material with the hydrophobic polymer, a suitable polar-modified hydrophobic polymer may be purchased commercially. Commercially available polar-modified hydrophobic polymers include without limitation the following: EXXELOR® 1015, a maleated polypropylene available from Exxon Chemical Co., having a melt flow rate (230° C.) of 120 grams/10 minutes and containing 0.4% by weight grafted maleic anhydride; POLYBOND® 3150, a maleated polypropylene available from Uniroyal Chemical Co., having a melt flow rate (230° C.) of 50 grams/10 minutes and containing 0.7% by weight grafted maleic anhydride; and POLYBOND® 3200, a maleated polypropylene available from Uniroyal Chemical Co., having a melt flow rate (230° C.) of 110 grams/10 minutes and containing 1.0% by weight grafted maleic anhydride.

The maleated polyolefin (or other polar-modified polymer) may itself be hydrophobic and not wettable to water, or borderline between hydrophobic and hydrophilic. The reaction with the polar material does not render the polymer backbone hydrophilic; rather, it provides a chemical linkage for the subsequent reaction with a hydrophilic material. Generally, the polar-modified polymer should contain about 0.1-3.0% by weight of the polar monomer, preferably about 0.4-1.0% by weight, more preferably about 0.6-0.8% by weight. Preferably, the polar material is grafted onto the hydrophobic polyolefin, resulting in a stereochemistry most favorable for further reaction.

The polar-modified hydrophobic polymer may be reacted with a hydrophilic material, thereby increasing the hydrophilicity of the polymer to render it wettable to water. The hydrophilic material can be a hydrophilic monomer, polymer, compound, or blend containing one or more of these. Suitable hydrophilic materials include organic alcohols, dialcohols, tertiary alcohols, polymers containing them, and other hydrophilic materials having groups which react with the polar group (e.g., the anhydride moiety) on a polar-modified hydrophobic polymer. Other suitable hydrophilic materials include polyglycols and polyoxides, including polyolefin glycols and oxides, such as polyethylene glycol, polyethylene oxide, polypropylene glycol, polypropylene oxide, and copolymers and mixtures thereof. Polyglycols include those having monoamine and/or diamine linkages which further promote hydrophilicity. The JEFF AMINE® series of polyglycols, available from Huntsman Chemical Co., includes monoamines and diamines of varying molecular weights. For further disclosure concerning the reaction between a polar-modified hydrophobic polymer and a hydrophilic material and disclosure in general about suitable functionalized polymers, see WO 2000012801.

As used herein, the term "tackifying resin" or "tackifier" includes:
(a) aliphatic and cycloaliphatic petroleum hydrocarbon resins having Ring and Ball softening points of from 10° C. to 160° C., as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins; examples of such commercially available resins based on a C5 olefin fraction of this type are Piccotac tackifying resin sold by Eastman Chemical Company and Escorez 131OLC sold by ExxonMobil Chemical Company;
(b) Aromatic petroleum hydrocarbon resins and the hydrogenated derivatives thereof;
(c) Aliphatic/aromatic petroleum derived hydrocarbon resins and the hydrogenated derivatives thereof;
(d) Aromatic modified cycloaliphatic resins and the hydrogenated derivatives thereof;
(e) Polyterpene resins having a softening point of from about 10° C. to about 140° C., the latter polyterpene resins generally resulting from the polymerization of terpene hydrocarbons, such as the mono-terpene known as pinene, in the presence of Friedel-Crafts catalysts at moderately low temperatures; also included are the hydrogenated polyterpene resins;
(f) Copolymers and terpolymers of natural terpenes, e.g. styrene/terpene, a-methyl styrene/terpene and vinyl toluene/terpene;
(g) natural and modified rosin such as, for example, gun rosin, wood rosin, tall-oil rosin, distilled rosin, hydrogenated rosin, dimerized rosin and polymerized rosin;
(h) glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin;
(i) phenolic-modified terpene resins such as, for example, the resin product resulting from the condensation in an acidic medium of a terpene and a phenol.

Mixtures of two or more of the above described tackifying resins may be required for some formulations. Tackifying resins which are useful for the present invention can also include polar tackifying resins. Suitable resins are aliphatic petroleum hydrocarbon resins examples of which are based on C5 olefins such as Hercotac 1148 available from Hercules Corp. Also suitable are nonpolar products which are hydrogenated dicyclopentadiene (DCPD) based or aromatically modified derivatives thereof with softening points above 70° C. Examples of such resins are Escorez 5400 and Escorez 5600 sold by ExxonMobil Chemical Company. Tackifiers may be present in superabsorbent immobilizer in amounts of 0% to 50% by weight, in some embodiments, from 5% to about 15%, in some embodiments, less than about 20% or less than about 10%.

A plasticizer can be present in the compositions of the present invention in amounts of 0% to about 10% by weight. A suitable plasticizer may be selected from the group which includes the usual plasticizing oils, such as mineral oil, but also olefin oligomers and low molecular weight polymers, as well as vegetable and animal oils and derivatives of such oils. The petroleum derived oils which may be employed are relatively high boiling materials containing only a minor proportion aromatic hydrocarbons. In this regard, the aromatic hydrocarbons should preferably be less than 30% and more particularly less than 15% of the oil, as measured by the fraction of aromatic carbon atoms. More preferably, the oil may be essentially non-aromatic. The oligomers may be polypropylenes, polybutenes, hydrogenated polyisoprenes, hydrogenated polybutadiens, or the like having average molecular weight between about 350 and about 9,000. Suitable vegetable and animal oils include glycerol esters of the usual fatty acids and polymerization products thereof. Other useful plasticizers can be found in the families of conventional dibenzoate, phosphate, phthalate esters, as well as esters of monoorpolyglycols. Examples of such plasticizers includes, but are not limited to dipropylene glycol dibenzoate, pentaerythritoltetrabenzoate, 2-ethylhexyl diphenyl phosphate, polyethylene glycol 400-di-2-ethylhexoate; butyl benzyl phthalate, dibutyl phthalate and dioctylphthalate.

A wax may be present in the superabsorbent immobilizer in amounts from 0% to about 35%, from about 5% to about 30%, or from about 10% to about 25%. The wax may be any of those conventionally used in hot melt compositions. Exemplary petroleum derived synthetic waxes are paraffin and microcrystalline waxes having melting points within a range of from about 55° C. to about 110° C., as well as low molecular weight polyethylene and Fischer-Tropsch waxes.

A surfactant used may have an HLB of less than 15, the said surfactant consisting of a fatty acid ester incorporated into the composition in an amount such that the resultant composition has a contact angle of 75° or less, and preferably less than about 40°. Contact angle measurements of liquid droplets on substrate surfaces are used to characterize surface wettability. The contact angle is defined as the angle between the substrate support surface and the tangent line at the point of contact of the liquid droplet with the substrate. The value of the contact angle of the liquid droplet will depend upon the surface energy of the substrate and the surface tension of the liquid. If complete wetting takes place between the liquid and the substrate surface, the droplet will spread out over the substrate and the contact angle will approach zero, whereas if wetting is only partial, the resulting contact angle will lie in the range of 0 to 180 degrees.

A low contact angle is desirable so that water, urine or other water-based discharges "wet out" rather than "bead up". The lower the contact angle, the more hydrophilic is the material. The water contact angle may be measured by ASTM D5946-96.

Additional examples of suitable surfactants include, but are not limited to, the following: (1) Fatty acid esters such as glycerol esters, PEG esters, and sorbitan esters, including ethylene glycol distearate, ethylene glycol monostrearate, glycerol mono and/or dioleate, PEG dioleate, PEG monolaurate, sorbitan monolaurate, sorbitan trioleate, etc. These surfactants are available from ICI, Rhone-Poulenc, and other sources; (2) Nonionic ethoxylates, such as alkylphenol ethoxylates, alcohol ethoxylates, alkylamine ethoxylates, etc., including octylphenol ethoxylate, nonylphenol ethoxylate, alkylamine ethoxylates, etc. These surfactants are available from Rhone-Poulenc, Union Carbide, and other sources; (3) Nonionic surfactants such as 2,4,7,9-tetramethyl-5-decyn-4,7-diol available from Air Products; (4) Ethylene oxide/Propylene oxide copolymers, which are available from Union Carbide, BASF, etc.; (5) Atmer 688, a nonionic surfactant blend, and Alkamuls GMS/C a glycerol monostearate, both manufactured by ICI Americas Inc. It should be noted that these and other surfactants can be blended if necessary to produce the best blend of hydrophilic performance properties. Other suitable surfactants may be found in U.S. Pat. No. 6,380,292.

Crystallinity enhancers that may be added to the superabsorbent immobilizer include, but are not limited to, microcrystalline waxes and crystalline olefin homopolymers. In particular, a linear polyethylene homopolymer may be used. Without being bound by theory it is believed that such materials crystallize more readily as temperature decreases due to minimal branching. The crystallites thus formed then serve as a template for crystallization of the polymeric material. In addition, crystallinity enhancers can be very small solid particles that act as a foreign phase providing a new surface on which crystal growth can occur. This foreign phase takes the form of a nucleating agent which has been designed to have a good epitaxial match with the growing polymer crystal. A uniform dispersion of these particles increases the crystallization nucleation and growth. Nucleation agents may be helpful for speeding up the transformation of the superabsorbent immobilizer from the molten state when it is applied to the superabsorbent. Examples of nucleation agents that work as crystallinity enhancers include inorganic and ceramic powders such as zirconia, calcium carbonate, magnesium silicate, silica gels, clays such as bentonite, metal oxides, and their organically modified versions thereof. Organic materials and salts can also work as nucleation agents, examples are aromatic carboxylic acid salts, sodium benzoate, and certain pigment colorants. Commercial examples of nucleation agents include the Hyperform® products from Milliken. Crystallinity enhancers may comprise less than about 5% of the superabsorbent immobilizer, in some cases, about 1% to 5%, or about 0.1% to about 1%, about 0.5% to about 2%, or from about 2% to about 4%.

### Test Methods

### Molecular Weight

Molecular weight, as used herein, refers to peak molecular weight, as determined using a gel permeation chromatography (GPC) method. GPC is a well-known method wherein polymers are separated according to molecular size, the largest molecule eluting first. The chromatograph is calibrated using commercially available polystyrene molecular weight standards. The peak molecular weights referred to herein can be determined with gel permeation chromatography (GPC) using polystyrene calibration standards, such as is done according to ASTM D5296. The molecular weight of any polymer or unknown polymer measured using GPC so calibrated is the styrene equivalent molecular weight, which herein is defined as the "peak molecular weight." Suitable solvents and temperatures are employed with GPC in order to achieve adequate molecular weight separation and resolution.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A method of distributing an adhesive from a nozzle (10), the method comprising the steps of:
melting the adhesive at a temperature of at least 100°C;
transporting the molten adhesive to the nozzle (10), wherein the nozzle (10) comprises upper nozzle assembly, lower nozzle assembly and at least one duct (40) within at least the upper nozzle assembly through which the molten adhesive is transported;
**characterised in that** the lower nozzle assembly comprises at least one cooling gas duct (50), and passing cooling gas through the cooling gas duct (50) wherein in the temperature of the cooling gas is from -20°C to + 50°C.

2. The method of claim 1 wherein the nozzle (10) further comprising a thermally insulating material (30) between the upper nozzle assembly and the lower nozzle assembly.

3. The method of claim 2 wherein the thermally insulating material (30) comprises polyetheretherketone, PEEK, or air.

4. The method of claim 1 wherein the temperature of the cooling gas is from 0°C to +30°C.

5. The method of any of claims 1 to 4 wherein the adhesive is a superabsorbent immobiliser.

6. The method of claim 5 wherein the superabsorbent immobiliser comprises at least about 50% by weight of one or more polymers each having a peak molecular weight of at least about 10 kg/mol, as determined using the gel permeation chromatography method.

7. The method of claim 1 wherein the nozzle (10) further comprises an adhesive distribution shim 60, wherein the adhesive distribution shim 60 comprises two sides, wherein adhesive distribution channels are arranged in both sides of the adhesive distribution shim 60.

8. A method of distributing an adhesive from a nozzle (10), the method comprising the steps of:
melting the adhesive at a temperature of at least 100°C;
transporting the molten adhesive to the nozzle (10), wherein the nozzle (10) comprises upper nozzle assembly, lower nozzle assembly, adhesive distribution shim (60) and at least one duct (40) within at least the upper nozzle assembly through which the molten adhesive is transported;
**characterised in that** the adhesive distribution shim (60) comprises two sides, wherein adhesive distribution channels are arranged in both sides of the adhesive distribution shim (60).

9. The method of claim 8 wherein the temperature of the cooling gas is from 0°C to +30°C.

10. The method of any of claims 8 or 9 wherein the adhesive is a superabsorbent immobiliser.

11. The method of claim 10 wherein the superabsorbent immobiliser comprises at least about 50% by weight of one or more polymers each having a peak molecular weight of at least about 10 kg/mol, as determined using the gel permeation chromatography method.

12. A nozzle assembly comprising upper nozzle assembly, lower nozzle assembly and at least one duct (40) within at least the upper nozzle assembly, **characterised in that** the nozzle assembly further comprises a thermally insulating (30) between the upper nozzle assembly and the lower nozzle assembly.

13. The nozzle assembly of claim 12 further comprising an adhesive distribution shim (60), wherein the adhesive distribution shim (60) comprises two sides, wherein adhesive distribution channels are arranged in both sides of the adhesive distribution shim (60).
